# DEMANDE DE BREVET EUROPEEN

(11) **EP 3 090 863 A1**
(43) Date de publication de la demande: **09.11.2016**
(21) Numéro de dépôt: 16166761.3
(22) Date de dépôt: 24.04.2016
(51) Int. Cl.: B29C 70/54, B29C 70/44, B29C 70/48, B29C 33/38, B29C 33/62

(54) **PROCÉDÉ ET DISPOSITIF POUR LA FABRICATION D'UN MOULE COMPOSITE COMPRENANT UNE FACE ANTIADHÉRENTE**

(30) Priorité: 25.04.2015 FR 1553735
(71) Demandeur: Institut de Recherche et de Technologie Jules Verne, 44340 Bouguenais (FR)
(72) Inventeur: TELLIER, Florian, 44100 NANTES (FR)
(74) Mandataire: Ipside

(57) **Abrégé**

Un procédé pour la fabrication d'un moule (200, 300) composite comprenant une surface (210, 311, 312) anti-adhérence, lequel procédé utilise un outillage comprenant :
a. une cavité apte à contenir une préforme (150) fibreuse sèche ;
b. des moyens (190) d'aspiration de l'intérieur de ladite cavité ;
c. deux canaux (115, 116) d'amenée d'un polymère dans la cavité débouchant de part et d'autre de la préforme (150) selon son épaisseur ;
d. une couche (131, 132) de répartition, placée entre chaque canal (115, 116) d'amenée du polymère et la préforme (115), et s'étendant sur la surface de ladite préforme ;
caractérisé en ce qu'il comprend les étapes consistant à :
i. placer une préforme (150) sèche dans la cavité de l'outillage;
ii. aspirer l'air contenu dans la cavité et la préforme avec les moyens (190) d'aspiration ;
iii. transférer une résine fonctionnalisée par des agents perfluorés par le canal d'amenée conduisant ladite résine du côté de la face anti-adhérence.

## Description

L'invention concerne un procédé et un dispositif pour la fabrication d'un moule composite comprenant une surface antiadhérente. L'invention est plus particulièrement destinée à la réalisation d'un moule composite de grande dimension, renforcé par des fibres continues, obtenue à partir d'une préforme fibreuse, dite sèche, dans laquelle est injecté un polymère thermodurcissable ou thermoplastique. Un tel moule est utilisé pour la fabrication d'une pièce de grande dimension en matériau composite, notamment, mais non exclusivement dans le domaine aéronautique, de la construction navale et de l'énergie.

Les techniques de transfert d'un polymère liquide dans une préforme fibreuse permettent d'obtenir des pièces composites dont le taux de renfort est élevé, typiquement supérieur à 60 %. Deux configurations de transfert sont utilisées selon l'art antérieur, le transfert dont le front liquide se propage essentiellement parallèlement aux plis et le transfert dont le front liquide se propage essentiellement perpendiculairement aux plis.

Au cours du transfert d'un polymère parallèlement aux plis dans une préforme de grande dimension, le polymère liquide doit parcourir un long trajet pour imprégner la totalité de la préforme. Au cours de ce trajet la température du polymère liquide diminue, ce qui augmente sa viscosité de sorte que l'imprégnation complète des fibres est de plus en plus difficile. L'imprégnation perpendiculairement aux plis, c'est-à-dire parallèlement à la direction de leur empilement, permet de réaliser un trajet plus court, mais la perte de charge subie par l'écoulement traversant lesdits plis est plus importante. Quel que soit le sens de l'imprégnation, l'augmentation de la pression pour compenser les pertes de charges liées à l'interaction du polymère visqueux avec les plis fibreux, augmente les risques de déplacer les plis et de créer des zones d'essorage ou des ondulations de fibres, ces défauts ayant un impact sur les propriétés mécaniques de la pièce obtenue. Ces effets néfastes sont d'autant plus importants que le polymère transféré dans la préforme est visqueux, et plus particulièrement lorsqu'il s'agit d'un polymère thermoplastique ou d'un polymère thermodurcissable fonctionnalisé, notamment à partir d'agents fluorés qui, d'une part, en augmentent la viscosité et d'autre part en diminuent le temps de polymérisation.

L'utilisation d'un moule constitué d'un matériau composite pour la mise en oeuvre d'un matériau composite similaire offre de nombreux avantages, notamment une réduction de la masse comparativement aux solutions de moules métalliques, et surtout, l'élimination des problèmes de dilatation thermique différentielle entre le moule et la pièce composite mise en oeuvre, particulièrement lorsque ladite pièce composite est renforcée par des fibres de carbone, le moule et la pièce mis en oeuvre se dilatant de la même manière.

L'utilisation d'un film polymère fluoré en tant que couche antiadhérente sur un moule constitué d'un matériau composite dont la matrice est une résine époxyde est décrite dans le document FR 2 987 302. Ce procédé de l'art antérieur donne satisfaction mais présente des difficultés de mise en oeuvre notamment pour assurer un contrôle précis de l'épaisseur de film déposée. L'invention vise notamment à résoudre cet inconvénient de l'art antérieur en réalisant le revêtement antiadhérent au cours de l'opération d'imprégnation du moule composite. Selon différents modes de réalisation le transfert de la résine antiadhérente est réalisé avant, pendant ou après le transfert d'imprégnation. Toutefois, ces modes de réalisation de l'outillage se heurtent à la viscosité et à l'accélération de la polymérisation de la résine ainsi modifiée. Aussi, l'utilisation d'un procédé d'infusion généralement adapté à la réalisation de pièces de grande dimension devient délicate, un tel procédé nécessitant la mise en oeuvre d'une résine particulièrement fluide.

La viscosité des résines thermodurcissables utilisées pour les procédés de fabrication des pièces composites par voie liquide est généralement inférieure à 0,1 Pa.s. Les polymères thermoplastiques spécifiquement optimisés pour une mise en oeuvre par voie liquide présentent une viscosité inférieure à 1 Pa.s, généralement de l'ordre de 0,5 Pa.s.

L'invention vise à résoudre les inconvénients de l'art antérieur et concerne à cette fin un procédé pour la fabrication d'un moule composite comprenant une surface antiadhérente, lequel procédé utilise un outillage comprenant :
a. une cavité apte à contenir une préforme fibreuse sèche ;
b. des moyens d'aspiration de l'intérieur de ladite cavité ;
c. deux canaux d'amenée d'un polymère dans la cavité débouchant de part et d'autre de la préforme selon son épaisseur ;
d. une couche de répartition, placée entre chaque canal d'amenée du polymère et la préforme, et s'étendant sur la surface de ladite préforme ;
lequel procédé comprend les étapes consistant à :
i. placer une préforme sèche dans la cavité de l'outillage ;
ii. aspirer l'air contenu dans la cavité et la préforme avec les moyens d'aspiration ;
iii. transférer une résine fonctionnalisée par des agents perfluorés par le canal d'amenée conduisant ladite résine du côté de la face antiadhérente.

Ainsi, le procédé objet de l'invention utilise une imprégnation par la propagation du front liquide perpendiculairement à la direction de stratification de la préforme, de part et d'autre de l'épaisseur de ladite préforme, afin de réduire le trajet nécessaire de la résine pour constituer l'imprégnation totale de la préforme. Le procédé permet ainsi, d'une part la mise en oeuvre d'un polymère, notamment une résine époxyde fonctionnalisée, plus visqueux, et le séquencement des opérations de transfert de part et d'autre de la préforme de sorte à réduire encore le trajet de la résine fonctionnalisée au strict nécessaire pour la création de la surface antiadhérente. Ladite surface antiadhérente est créée alors que la préforme correspondant au moule se trouve dans l'outillage ce qui assure la précision dimensionnelle de celle-ci. La couche de répartition, permet d'assurer une répartition homogène du polymère transféré par les canaux d'amenée sur toute la surface de la préforme. La nature de cette couche est sélectionnée en fonction de la viscosité du polymère transféré.

Sans ce que ces valeurs ne constituent des limites de mise en oeuvre de l'invention, dans tout le texte, un polymère visqueux est considéré comme ayant, lors du transfert, une viscosité comprise entre 1 Pa.s et 100 Pa.s. Une préforme fibreuse de grande dimension couvre une surface comprise entre 1 m² et 10 m². Une préforme sèche s'entend d'une préforme fibreuse comprenant moins de 5 % de polymère avant son imprégnation.

L'invention est avantageusement mise en oeuvre selon les modes de réalisations et les variantes exposés ci-après, lesquels sont à considérer individuellement ou selon toute combinaison techniquement opérante.

Selon un mode de réalisation particulier du procédé objet de l'invention, l'étape iii) comprend le transfert d'une résine fonctionnalisée par les canaux d'amenée situés des deux côtés de la préforme. Ce mode de réalisation permet d'obtenir un moule comprenant deux surfaces antiadhérentes ou entièrement constitué d'une résine aux propriétés antiadhérente, notamment lorsque ledit moule doit subir des opérations de d'usinage dans l'épaisseur pour acquérir sa configuration finale de mise en oeuvre.

Selon des variantes de réalisation du procédé, la cavité de l'outillage est comprise entre une matrice et une bâche à vide ou entre deux matrices rigides. Le choix de la configuration dépend de la nature du polymère mis en oeuvre, de la précision dimensionnelle visée pour le moule, et de la pression nécessaire au transfert du polymère.

L'invention concerne également un outillage pour la mise en oeuvre du procédé objet de l'invention selon l'un quelconque de ses modes de réalisation, outillage comprenant une couche de répartition consistant en une plaque rigide percée d'un réseau de trous dont le diamètre est compris entre 2 mm et 20 mm et qui sont répartis sur ladite plaque selon des mailles de 2 cm à 20 cm de côté. Cet outillage est plus particulièrement, mais non exclusivement, adapté à la mise en oeuvre d'un polymère visqueux, notamment un polymère thermoplastique, le diamètre des perforations étant déterminé selon la viscosité du polymère transféré et les caractéristiques de la préforme. De manière surprenante, une telle plaque de répartition permet de diviser l'écoulement du polymère à la surface de la préforme et d'appliquer la pression nécessaire à son transfert, l'imprégnation étant réalisée par la migration du polymère dans la direction de stratification, sans que celle-ci n'entraîne un déplacement des plis de la préforme stratifiée, pour ainsi obtenir une imprégnation homogène des fibres de la préforme.

L'invention concerne également un moule pour la fabrication d'une pièce en matériau composite, lequel moule est obtenu par le procédé selon l'invention, et est constitué d'un matériau composite à renfort fibreux continu dans une matrice polymère, ladite matrice polymère présentant des propriétés antiadhérentes sur une des faces dudit moule.

L'invention est exposée ci-après selon ses modes de réalisation préférés, nullement limitatifs, et en référence aux figures 1 à 3, dans lesquelles :
- la figure 1 illustre schématiquement un exemple de réalisation d'un outillage selon l'invention, figure 1A, selon une vue en coupe AA définie figure 1B, et figure 1B selon une vue de dessus, ne montrant que la matrice de cet outillage ;
- la figure 2 montre selon une vue en coupe, un exemple de réalisation d'un moule composite selon l'invention, comprenant une surface moulante antiadhérente ;
- et la figure 3 représente, selon une vue en coupe, un autre exemple de réalisation d'un moule composite selon l'invention, comprenant deux surfaces antiadhérentes.

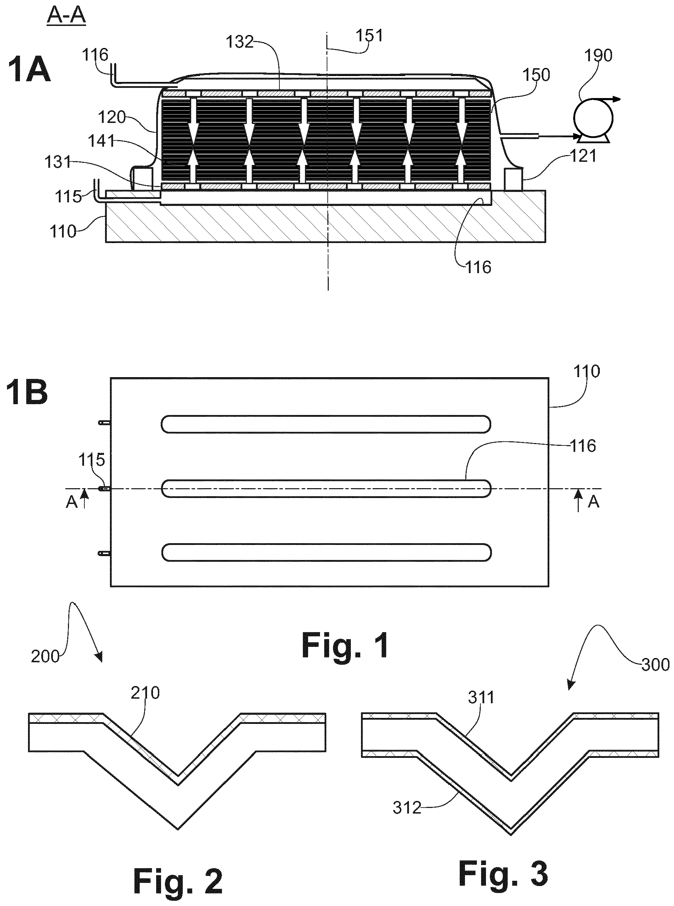

L'outillage objet de l'invention est représenté figure 1 dans une configuration comprenant une matrice de forme plane afin d'en faciliter la représentation. L'outillage objet de l'invention est cependant adapté à toute forme de surface moulante.

Figure 1A, selon un exemple de réalisation d'un outillage objet de l'invention, celui-ci comporte une matrice (110) comportant une empreinte reproduisant la forme à obtenir. Une préforme (150) fibreuse est placée dans ladite matrice, et, selon cet exemple de réalisation, ensachée dans une bâche (120) à vide. Ainsi le volume compris entre la matrice (110) et la bâche (120) à vide, coopérant avec des joints (121) d'étanchéité, constitue une cavité étanche dans laquelle est contenue la préforme (150) fibreuse. La préforme (150) fibreuse est constituée d'une stratification de plis de fibres continues, empilés selon une direction (151) de stratification.

Des moyens (190) permettent de tirer au vide la cavité dans laquelle est placée la préforme.

Selon un exemple de réalisation, la matrice (110) comprend un canal (115) pour l'amenée d'un polymère afin d'imprégner la préforme par ledit polymère. Des aménagements (116) par exemple sous la forme de rainures permettent de distribuer ce polymère sur la surface de la matrice (110).

Préalablement à la réalisation du transfert, le polymère est porté à une température adaptée.
Figure 1B, selon un exemple de réalisation l'outillage objet de l'invention, celui-ci comprend plusieurs canaux (115) pour l'amenée d'un polymère d'imprégnation de la préforme.

Selon des variantes de réalisation et en fonction de la viscosité du polymère utilisé pour l'imprégnation, ledit polymère est transféré par la seule différence de pression résultant du tirage au vide de la cavité dans laquelle se trouve la préforme, ou par des moyens d'injection sous pression. Dans le cas d'une injection du polymère sous pression, l'outillage est constitué de deux matrices rigides et comprend des moyens aptes à maintenir la fermeture des deux matrices délimitant la cavité dans laquelle se trouve la préforme.

Une couche de répartition (131, 132) est interposée entre l'arrivée du polymère et la préforme (150). Selon un exemple de réalisation, lorsque la viscosité du polymère transféré dans l'outillage le permet, ladite couche de répartition est souple et constituée d'un filet de drainage superposé à un film perforé, le filet de drainage se trouvant du côté de l'arrivée du polymère et le film perforé du côté de la préforme.

Pour le transfert d'un polymère visqueux, la couche de répartition est avantageusement une plaque (131) rigide perforée, interposée entre l'arrivée du polymère et la préforme (150). Ladite plaque perforée est conformée à la forme de la surface moulante de la matrice, et comprend, selon un exemple de réalisation, un réseau de trous d'un diamètre compris ente 2 mm et 20 mm répartis sur la surface de la plaque (131) par exemple selon une maille carrée de 2 cm à 20 cm de côté. Ladite plaque est avantageusement enduite d'un agent antiadhérent, et, par exemple, séparée de la préforme (150) par un tissu de verre (non représenté). La plaque perforée permet de répartir le flux de polymère arrivant du canal d'amenée sur l'ensemble de la surface de la préforme, et de manière surprenante, améliore l'homogénéité de l'imprégnation de ladite préforme lorsque le polymère est très visqueux, comme un polymère thermoplastique.

Le front de polymère imprégnant la préforme progresse selon une direction (141) parallèle à la direction (151) de stratification, c'est-à-dire perpendiculairement aux plis, depuis l'extérieur vers le centre de la préforme.

L'outillage pour la mise en oeuvre du procédé objet de l'invention comporte également un canal (135) d'amenée du polymère dans la préforme sur sa face opposée à celle reposant sur la matrice (110). Des moyens de distribution permettent une première répartition du polymère sur la surface de l'outillage et une couche de répartition (132), s'étendant sur la surface de la préforme (150) est interposée entre le flux de polymère et la préforme. Avantageusement, pour le transfert d'un polymère visqueux, la couche de répartition consiste en une plaque (132) rigide perforée d'un réseau de trous dont le diamètre compris entre 2 mm et 20 mm est choisi en fonction de la viscosité du polymère transféré dans la préforme. La rigidité de la plaque (132) perforée, lui permet de jouer le rôle d'une tôle de conformation ou « *caule plate ».* Ladite plaque (132) perforée est par exemple enduite d'un agent démoulant et séparée de la préforme fibreuse par un tissu de verre (non représenté).

Selon des modes de réalisation, l'outillage objet de l'invention comprend une couche de répartition souple côté bâche (120) à vide et une plaque de répartition rigide côté matrice (110) ou vice-versa, ou encore deux plaques rigides (131, 132) de part et d'autre de la préforme (150) selon la viscosité du polymère transféré du côté considéré.

Cet ensemble permet de faire diffuser le polymère selon une direction (142) parallèle à la direction (151) de stratification depuis l'extérieur, vers le coeur de la préforme (150). Ainsi, les deux flux (141, 142) de polymère imprègnent la préforme selon des directions parallèles mais selon des sens de progression opposés.

Figure 2, selon un exemple de réalisation, le moule (200) composite objet de l'invention comporte une matrice constituée d'une résine époxyde et renforcée par des fibres continues, et une couche (210) de résine fonctionnalisée avec des agents perfluorés, qui crée une surface moulante antiadhérente. Selon un exemple de réalisation, la couche (210) antiadhérente est constituée d'une résine fonctionnalisée renforcée par des fibres courtes.

L'invention est ici décrite dans le cas d'une résine fonctionnalisée par des agents fluorés, lui conférant des propriétés antiadhérentes. Le procédé et l'outillage objets de l'invention sont adaptés au transfert dans une préforme fibreuse d'autres polymères, fonctionnalisés par d'autres types d'additifs mais ayant des effets similaires sur la viscosité dudit polymère, ou visant un résultat comparable d'une couche fonctionnalisée en surface de la pièce finale obtenue par le procédé objet de l'invention.

En revenant à la figure 1, selon un exemple de réalisation où la couche fonctionnalisée du moule représenté figure 2 se trouve côté matrice (110), le procédé objet de l'invention comprend les étapes consistant à transférer la résine non fonctionnalisée par les deux canaux (115, 116) d'amenée de sorte à imprégner la préforme de cette résine, puis, au cours de ce processus d'imprégnation, de transférer de la résine comprenant des composants perfluorés par le canal (115) d'amenée, conduisant ladite résine du côté de la surface antiadhérente de la préforme. La couche de résine fonctionnalisée est ainsi moulée contre la matrice. Le même séquencement du transfert est possible, cette fois en transférant la résine comprenant les composants perfluoré par le canal (116) d'amenée débouchant de l'autre côté de la préfome (150) la face fonctionnalisée étant alors réalisée de ce côté. La couche de répartition placée du côté de l'arrivée de la résine fonctionnalisée est préférentiellement constituée d'une plaque rigide perforée. Selon cette dernière variante, ladite plaque (132) perforée agit également comme tôle de conformation pour lisser la couche antiadhérente injectée de ce côté de la préforme.

Figure 3, selon un autre exemple de réalisation, le procédé objet de l'invention permet de réaliser un moule (300) composite comprenant 2 surfaces (311, 312) antiadhérentes.

En revenant à la figure 1, la réalisation d'un moule composite comprenant deux surfaces antiadhérentes, comme représenté figure 3, par le procédé objet de l'invention, comprend une étape consistant à transférer de la résine fonctionnalisée par les deux canaux (115, 116) d'amenée de l'outillage. Dans ce cas, la couche de répartition des deux côtés de la préforme consiste préférentiellement en une plaque (131, 132) rigide perforée.

La description ci-avant et les exemples de réalisation montrent que l'invention atteint les objectifs visés, en particulier elle permet la réalisation d'un moule composite de grandes dimensions, comprenant une surface antiadhérente créée en même temps que l'imprégnation de la préforme dudit moule afin d'obtenir la précision dimensionnelle de la surface moulante. Ce procédé associé à l'outillage objet de l'invention est également adapté à la réalisation, par transfert dans une préforme fibreuse, d'une pièce composite de grandes dimensions à matrice thermoplastique.

## Revendications

1. Procédé pour la fabrication d'un moule (200, 300) composite comprenant une surface (210, 311, 312) antiadhérente, lequel procédé utilise un outillage comprenant :
a. une cavité apte à contenir une préforme (150) fibreuse sèche ;
b. des moyens (190) d'aspiration de l'intérieur de ladite cavité ;
c. deux canaux (115, 116) d'amenée d'un polymère dans la cavité, débouchants de part et d'autre de la préforme (150) selon son épaisseur ;
d. une couche (131,132) de répartition, placée entre chaque canal (115, 116) d'amenée du polymère et la préforme (115), et s'étendant sur la surface de ladite préforme ;
**caractérisé en ce qu'**il comprend les étapes consistant à :
i. placer une préforme (150) fibreuse sèche dans la cavité de l'outillage;
ii. aspirer l'air contenu dans la cavité et la préforme fibreuse avec les moyens (190) d'aspiration ;
iii. transférer une résine fonctionnalisée, notamment par des agents perfluorés, par le canal d'amenée conduisant ladite résine du côté de la face antiadhérente.

2. Procédé selon la revendication 1, dans lequel l'étape iii) comprend le transfert d'une résine fonctionnalisée par les canaux (115, 116) d'amenée situés des deux côtés de la préforme.

3. Procédé selon la revendication 1, comprenant une étape consistant à :
iv. transférer une résine non fonctionnalisée par un canal d'amenée conduisant ladite résine sur la face opposée à la face antiadhérente de la préforme.

4. Procédé selon les revendications 1 à 3, dans lequel la cavité est comprise entre une matrice (110) et une bâche (120) à vide.

5. Procédé selon les revendications 1 à 3, dans lequel la cavité est comprise entre deux matrices rigides.

6. Outillage pour la mise en oeuvre d'un procédé selon l'une quelconque des revendications 1 à 5, **caractérisé en ce qu'**il comprend une couche de répartition consistant en une plaque (131, 132) rigide percée d'un réseau de trous d'un diamètre compris entre 2 mm et 20 mm, répartis à la surface de ladite plaque selon des mailles de 2 cm à 20 cm de côté.

7. Moule (200, 300) pour la fabrication d'un pièce en matériau composite, lequel moule est obtenu par un procédé selon l'une quelconque des revendications 1 à 5, **caractérisé en ce qu'**il est constitué d'un matériau composite à renfort fibreux continu dans une matrice polymère et que ladite matrice polymère possède des propriétés antiadhérentes sur une des faces dudit moule.
